# EUROPÄISCHE PATENTSCHRIFT

(11) **EP 3 152 078 B1**
(45) Veröffentlichungstag und Bekanntmachung des Hinweises auf die Patenterteilung: **15.04.2020**
(21) Anmeldenummer: 15735874.8
(22) Anmeldetag: 24.06.2015
(51) Int. Cl.: B60K 28/16, B60T 8/17, B60T 17/22

(54) **VERFAHREN UND ANORDNUNG ZUM ÜBERWACHEN DES FAHRZUSTANDS EINES FAHRZEUGS UND FAHRZEUG MIT EINER SOLCHEN ANORDNUNG**
METHOD AND ARRANGEMENT FOR MONITORING THE TRAVEL STATE OF A VEHICLE, AND VEHICLE HAVING SUCH AN ARRANGEMENT
PROCÉDÉ DE SURVEILLANCE DE L'ÉTAT DE ROULEMENT D'UN VÉHICULE ET VÉHICULE COMPRENANT UN TEL DISPOSITIF

(30) Priorität: 25.07.2014 DE 102014214652
(43) Veröffentlichungstag der Anmeldung: 12.04.2017
(73) Patentinhaber: Siemens Mobility GmbH, 81739 München (DE)
(72) Erfinder: PÖSEL, Bernhard, 38154 Königslutter (DE); BÜTOW, Jochen, 38126 Braunschweig (DE)
(86) Internationale Anmeldenummer: PCT/EP2015/064272
(87) Internationale Veröffentlichungsnummer: WO 2016/012185

(56) Entgegenhaltungen:
- EP-A1- 2 450 247
- EP-A2- 1 662 183
- WO-A1-2009/060090
- WO-A1-2011/043729
- WO-A1-2011/054363
- WO-A2-2010/069520
- DE-A1-102008 003 874
- DE-A1-102010 014 003
- US-A1- 2005 075 827
- US-A1- 2011 127 097
- US-A1- 2012 209 484

## Beschreibung

Die Erfindung betrifft ein Verfahren zum Überwachen des Fahrzustands eines Fahrzeugs, insbesondere eines Schienenfahrzeugs, bei dem an einem Antriebsrad des Fahrzeugs mittels einer Impulsgeber-Einrichtung ein Raddrehzahlsignal erfasst wird.

Ein solches Verfahren lässt sich beispielsweise der deutschen Offenlegungsschrift DE 10 2008 003 874 A1 entnehmen. Bei diesem bekannten Verfahren wird mittels eines Sensors die Raddrehzahl ermittelt und ein Raddrehzahlsignal gebildet. Aus dem Raddrehzahlsignal wird in einer Auswerteeinheit der zeitliche Verlauf eines Geschwindigkeitssignals bestimmt und allein aus dem zeitlichen Verlauf des Geschwindigkeitssignals iterativ ein Schlupf-Wert berechnet. Weitere Verfahren zur Überwachung des Fahrzustands von Fahrzeugen sind aus EP 1 662 183 A2, EP 2 450 247 A1 und DE 10 2010 014 003 A1 bekannt.

Der Erfindung liegt die Aufgabe zugrunde, ein Verfahren zum Überwachen des Fahrzustands eines Fahrzeugs vorzuschlagen, das sich vergleichsweise einfach und zuverlässig durchführen lässt.

Zur Lösung dieser Aufgabe wird bei einem Verfahren der eingangs angegebenen Art erfindungsgemäß der zeitliche Verlauf des Raddrehzahlsignals ermittelt, und es werden Sprünge im zeitlichen Verlauf des Raddrehzahlsignals detektiert; bei Überschreitungen eines vorgegebenen Grenzwerts der Sprünge im zeitlichen Verlauf des Raddrehzahlsignals wird ein Schlupf-Hinweissignal erzeugt. Mittels eines Beschleunigungsgebers wird zeitparallel zum Erfassen des Raddrehzahlsignals ein Beschleunigungssignal hinsichtlich seines zeitlichen Verlaufs erfasst, Beschleunigungssprünge werden im zeitlichen Verlauf des Beschleunigungssignals detektiert; bei Überschreitungen eines vorgegebenen Schwellenwerts der Beschleunigungssprünge wird ein weiteres Schlupf-Hinweissignal erzeugt. Ein Schlupf-Signal wird erzeugt, wenn das eine Schlupf-Hinweissignal gleichzeitig mit dem weiteren Schlupf-Hinweissignal auftritt.

Ein Vorteil des erfindungsgemäßen Verfahrens wird darin gesehen, dass mit ihm auf vergleichsweise einfache Art und Weise schnell ein Schlupf-Hinweissignal erzeugt werden kann, das zur Groberkennung eines Schlupfes unter Sicherheitsgesichtspunkten ausreichend ist. Das Schlupf-Hinweissignal kann also für sich als Aussage für das Vorhandensein eines Schlupfes herangezogen werden.

Um den Fahrzustand eines Fahrzeugs hinsichtlich des Auftreten eines Schlupfes besonders zuverlässig zu überwachen, wird bei dem erfindungsgemäßen Verfahren mittels eines Beschleunigungsgebers zeitparallel zum Erfassen des Raddrehzahlsignals ein Beschleunigungssignal hinsichtlich seines zeitlichen Verlaufs erfasst, und es werden Beschleunigungssprünge detektiert; bei Überschreitungen eines vorgegebenen Schwellenwerts der Beschleunigungssprünge wird ein weiteres Schlupf-Hinweissignal erzeugt und ein Schlupf-Signal gebildet, wenn das eine Schlupf-Hinweissignal gleichzeitig mit dem weiteren Schlupf-Hinweissignal auftritt. Auf diese Weise wird auf zwei verschiedenen Wege mittels Bildung der Schlupf-Hinweissignale der Fahrzustand eines Fahrzeugs hinsichtlich des Auftretens eines Schlupfes überwacht und in Form des Schlupf-Signals zuverlässig eine Information darüber gewonnen, dass das Fahrzeug mit Schlupf bewegt wird.

Verfeinern lässt sich das erfindungsgemäße Verfahren, wenn in vorteilhafter Weise zur Ermittlung des zeitlichen Verlaufs des Raddrehzahlsignals ein Raddrehzahlsignal verwendet wird, das mittels einer Impulsgeber-Einrichtung erzeugt wird, die bei einer Umdrehung des Antriebsrads mehrfach beaufschlagt wird. Als eine solche Einrichtung kommt vorteilhaft ein Aufbau in Frage, der ein mit dem Antriebsrad des Fahrzeugs sich drehendes Polrad mit einer Vielzahl von Polen aufweist; wird von diesem Polrad eine Spule mit einem Eisenkern beeinflusst, die eingangsseitig an den frequenzbestimmenden Eingangskreis eines Oszillators angeschlossen ist, dann lässt sich mit einem dem Oszillator nachgeordneten Diskriminator mit nachgeschaltetem Schmitt-Trigger ein Raddrehzahlsignal relativ hoher Frequenz erzeugen. Dies bietet dann den Vorteil, dass Sprünge im Verlauf eines solchen Raddrehzahlsignals vergleichsweise schnell und genau ermittelt werden können und somit das Schlupf-Hinweissignal besonders schnell zur Verfügung steht.

Zur Zuverlässigkeit des erfindungsgemäßen Verfahrens trägt es in vorteilhafter Weise bei, wenn das Verfahren mit einem räumlich benachbart zu der Impulsgeber-Einrichtung für das Raddrehzahlsignal angeordneten Beschleunigungsgeber durchgeführt wird und zur Erzeugung des Schlupf-Signals eine Auswerteeinrichtung verwendet wird, die ebenfalls benachbart zu der Impulsgeber-Einrichtung für das Raddrehzahlsignal und dem Beschleunigungsgeber angeordnet ist. Auf diese Weise wird das Schlupf-Signal gewissermaßen vor Ort, das heißt, in unmittelbarer Nähe des Antriebsrads aus den Schlupf-Hinweissignalen erzeugt und kann daher als niederfrequentes Signal auf einem hinsichtlich seiner Übertragungsqualität relativ anspruchslosen Übertragungsweg übermittelt werden.

Bei dieser Ausführungsform des erfindungsgemäßen Verfahrens kann in vorteilhafter Weise als Auswerteeinrichtung ein Microcontroller verwendet werden.

Wie oben bereits erwähnt, kann das Schlupf-Signal in einfacher Weise weiter übertragen werden, vorteilhaft über ein Kabel zu einem übergeordneten Odometrie-System des Fahrzeugs, wobei ein stromloser Zustand als Anzeichen für Gleiten und Schlupf des Fahrzeugs bewertet wird.

Die Erfindung betrifft ferner eine Anordnung zum Überwachen des Fahrzustands eines Fahrzeugs, insbesondere eines Schienenfahrzeugs, mit mindestens einer Impulsgeber-Einrichtung zum Erfassen eines Raddrehzahlsignals, wie es aus der eingangs behandelten deutschen Offenlegungsschrift hervorgeht.

Um eine solche Anordnung so auszugestalten, dass sich ein Überwachen des Fahrzustands eines Fahrzeugs vergleichsweise einfach und damit auch zuverlässig durchführen lässt, ist erfindungsgemäß an die Impulsgeber-Einrichtung eine Messwertverarbeitungs-Einrichtung angeschlossen, die geeignet ist, den zeitlichen Verlauf des Raddrehzahlsignals zu ermitteln und Sprünge im zeitlichen Verlauf des Raddrehzahlsignals zu detektieren und bei Überschreitungen vorgegebener Grenzwerte der im zeitlichen Verlauf des Raddrehzahlsignals ein Schlupf-Hinweissignal zu erzeugen. Um besonders zuverlässig ein Schlupf-Signal zu erzeugen, ist bei der erfindungsgemäßen Anordnung ein Beschleunigungsgeber mit nachgeordneter Messwertverarbeitungs-Anordnung vorgesehen, die geeignet ist, zeitparallel zum Erfassen des Raddrehzahlsignals ein Beschleunigungssignal hinsichtlich seines zeitlichen Verlaufs zu erfassen und Beschleunigungssprünge zu detektieren und bei Überschreitungen eines vorgegebenen Schwellenwertes der Beschleunigungssprünge ein weiteres Schlupf-Hinweissignal zu erzeugen; an die Messwertverarbeitungs-Einrichtung und an die Messwertverarbeitungs-Anordnung ist eine Auswerteeinrichtung angeschlossen, die geeignet ist, das Schlupf-Signal zu erzeugen, wenn das eine Schlupf-Hinweis-Signal gleichzeitig mit dem weiteren Schlupf-Hinweissignal auftritt.

Eine solche Anordnung weist sinngemäß die gleichen Vorteile auf, wie sie oben im Zusammenhang mit dem erfindungsgemäßen Verfahren angegeben worden sind.

Bei der erfindungsgemäßen Anordnung ist die Impulsgeber-Einrichtung vorteilhafterweise geeignet, bei einer Umdrehung des Antriebsrads mehrfach beaufschlagt zu werden. Dabei kann die Impulsgeber-Einrichtung mit einem Polrad, einem Oszillator, einem Diskriminator und einem Schmitt-Trigger versehen sein, wie es oben bereits näher beschrieben ist.

Vorteilhaft erscheint es ferner, wenn bei der erfindungsgemäßen Anordnung benachbart zur Impulsgeber-Einrichtung für das Raddrehzahlsignal der Beschleunigungsgeber und die Messwertverarbeitungs-Einrichtung sowie die Messwertverarbeitungs-Anordnung und die Auswerteeinrichtung angeordnet sind. Dies trägt zur Zuverlässigkeit der erfindungsgemäßen Anordnung bei.

Auch ist es vorteilhaft, bei der erfindungsgemäßen Anordnung die Messwertverarbeitungs-Einrichtung und die Messwertverarbeitungs-Anordnung sowie die Auswerteeinrichtung als einen Microcontroller ausbilden.

Bei der erfindungsmäßen Anordnung ist die Auswerteeinrichtung vorteilhafterweise über ein Kabel mit einem übergeordneten Odometrie-System des Fahrzeugs verbunden.

Die Erfindung betrifft ferner ein Fahrzeug, insbesondere Schienenfahrzeug, das hinsichtlich seines Fahrzustandes zuverlässig und schnell überwachbar ist, indem es mit der erfindungsgemäßen Anordnung ausgerüstet ist.

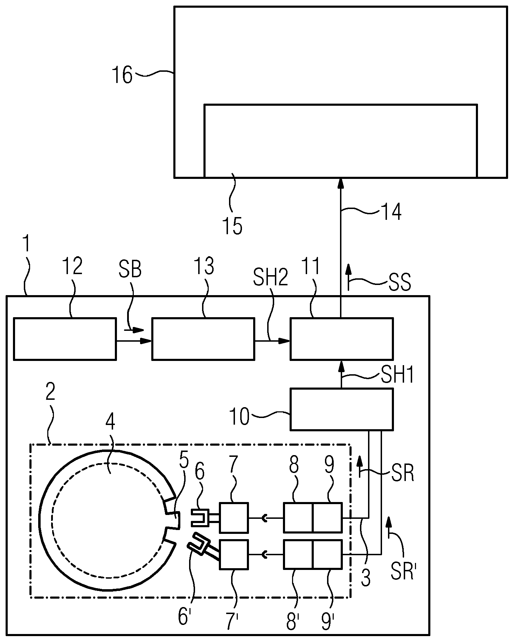

Zur weiteren Erläuterung ist in der Figur ein Ausführungsbeispiel einer Anordnung zum Durchführen des erfindungsgemäßen Verfahrens dargestellt.

Die Figur zeigt eine Anordnung 1 zum Überwachen des Fahrzustandes eines nicht dargestellten Fahrzeugs, bei dem es sich im vorliegenden Fall um ein Schienenfahrzeug handeln soll.

Die Anordnung enthält eine Einrichtung 1 mit einer Impulsgebereinrichtung 2, die an ihrem einen Ausgang 3 ein Raddrehzahlsignal SR erzeugt. Dazu ist die Impulsgeber-Einrichtung 2 mit einem Polrad 4 versehen, das sich mit einem hier nicht gezeigten Antriebsrad des Schienenfahrzeugs dreht. Das Polrad 4 ist mit einer Reihe von Polen 5 versehen, bevorzugt mit 16 Polen. Bei der Drehung des Polrades 4 erzeugt der jeweils an einem Aufnahmesensor 6 vorbeilaufende Pol 5 des Polrades 4 einen Spannungsimpuls, der einem nachgeordneten, verstimmbaren Oszillator 7 zugeführt wird. Bei jedem Vorbeilaufen eines Pols 5 wird also der Oszillator 7 kurzzeitig verstimmt. Dieses Verhalten des Oszillators 7 wird von einem Diskriminator 8 erfasst, der an den Oszillator 7 angeschlossen ist. An den Diskriminator 8 ist ein Schmitt-Trigger 9 angeschlossen, von dem am Ausgang 3 das Raddrehzahlsignal SR in Abhängigkeit von den an dem Aufnahmesensor 6 vorbeilaufenden Polen 5 abgegeben wird.

Der Impulsgeber-Einrichtung 2 ist eine Messwertverarbeitungs-Einrichtung 10 nachgeordnet, die so ausgebildet ist, dass sie den zeitlichen Verlauf des Raddrehzahlsignals SR ermitteln kann, insbesondere Sprünge im zeitlichen Verlauf des Raddrehzahlsignals SR detektieren kann. Die Messwertverarbeitungs-Einrichtung 10 erzeugt bei Überschreitungen vorgegebener Grenzwerte im zeitlichen Verlauf des Raddrehzahlsignals SR ein Schlupf-Hinweissignal SH1. Mit diesem Schlupf-Hinweis-Signal SH1 wird eine Auswerteeinrichtung 11 beaufschlagt, die an die Messwertverarbeitungs-Einrichtung 10 angeschlossen ist. Das Schlupf-Hinweissignal SH1 kann als Schlupf-Überwachungssignal benutzt werden.

Bei dem dargestellten Ausführungsbeispiel enthält die Anordnung 1 zum Überwachen des Fahrzustands zusätzlich einen Beschleunigungsgeber 12, der an dem Schienenfahrzeug vorzugsweise in der Nähe der Impulsgeber-Einrichtung 2 und der Messwertverarbeitungs-Einrichtung 10 und der Auswerteinrichtung 11 angeordnet ist. In diesem - nur schematisch dargestellten - Beschleunigungsgeber 12 wird zeitlich parallel zum Erfassen des Raddrehzahlsignals SR ein Beschleungigungssignal SB erzeugt und einer Messwertauswerte-Anordnung 13 zugeführt. In der Messwertauswerte-Anordnung 13 werden Beschleunigungssprünge in dem Beschleunigungssignal SB detektiert. Überschreiten diese Beschleunigungssprünge einen vorgegebenen Schwellenwert, dann wird ein weiteres Schlupf-Hinweissignal SH2 erzeugt und der Auswerteeinrichtung 11 zugeführt. Von der Auswerteeinrichtung 11 wird ein Schlupf-Signal SS erzeugt, wenn beide Schlupf-Hinweissignale SH1 und SH2 vorliegen.

Das Schlupf-Signal SS der Auswerteeinrichtung 11 kann wegen seiner vergleichsweise niedrigen Frequenz über ein Kabel 14 mit relativ niedrigen Übertragungseigenschaften einem übergeordneten Odometrie-System 15 eines nicht weiter dargestellten Zugsicherungssystems 16 zugeführt werden. Dabei erfolgt die Übertragung nach dem Ruhestromprinzip, so dass ein Kabelbruch erwünschterweise wie das Auftreten eines Schlupf-Signal von dem Odometriesystem 15 bewertet wird. Fließt also kein Ruhestrom, dann wird dies wie Gleiten und Schlupf des Fahrzeugs bewertet.

Wie die Figur ferner zeigt, ist die Impulsgeber-Einrichtung 2 mit einem weiteren Aufnahmesensor 6' versehen, dem ein weiterer abstimmbarer Oszillator 7' nachgeordnet ist. Bei der Drehung des Polrades 4 bewirkt der jeweils an dem Aufnahmesensor 6 ' vorbei laufende Pol 5 des Polrades 4 eine Verstimmung des weiteren verstimmbaren Oszillators 7'. Mittels eines weiteren Diskriminator 8' mit nachgeordnetem weiteren Schmitt-Trigger 9' wird ein zusätzliches Raddrehzahlsignal SR' in Abhängigkeit von den an dem Aufnahmesensor 6 vorbeilaufenden Polen 5 abgegeben, wenn sich das zugeordnete Antriebsrad des Schienenfahrzeugs in entgegengesetzter Richtung dreht. Die weitere Ermittlung eines Schlupf-Signals bei einer Fahrt des Schienenfahrzeugs in entgegengesetzter Richtung erfolgt genauso, wie es oben beschrieben worden ist.

## Patentansprüche

1. Verfahren zum Überwachen des Fahrzustands eines Fahrzeugs, insbesondere eines Schienenfahrzeugs, bei dem an einem Antriebsrad des Fahrzeugs mittels einer Impulsgeber-Einrichtung (2) ein Raddrehzahlsignal (SR) erfasst wird,
**dadurch gekennzeichnet, dass**
- der zeitliche Verlauf des Raddrehzahlsignals (SR) ermittelt wird und Sprünge im zeitlichen Verlauf des Raddrehzahlsignals (SR) detektiert werden,
- bei Überschreitungen eines vorgegebenen Grenzwerts der Sprünge im zeitlichen Verlauf des Raddrehzahlsignals (SR) ein Schlupf-Hinweissignal (SH1) erzeugt wird,
- mittels eines Beschleunigungsgebers (12) zeitparallel zum Erfassen des Raddrehzahlsignals (SR) ein Beschleunigungssignal (SB) hinsichtlich seines zeitlichen Verlaufs erfasst wird, Beschleunigungssprünge im zeitlichen Verlauf des Beschleunigungssignals (SB) detektiert werden,
- bei Überschreitungen eines vorgegebenen Schwellenwerts der Beschleunigungssprünge ein weiteres Schlupf-Hinweissignal (SH2) erzeugt wird und
- ein Schlupf-Signal (SS) erzeugt wird, wenn das eine Schlupf-Hinweissignal (SH1) gleichzeitig mit dem weiteren Schlupf-Hinweissignal (SH2) auftritt.

2. Verfahren nach Anspruch 1,
**dadurch gekennzeichnet, dass**
zur Ermittlung des zeitlichen Verlaufs des Raddrehzahlsignals ein Raddrehzahlsignal (SR) verwendet wird, das mittels einer Impulsgeber-Einrichtung (2) erzeugt wird, die bei einer Umdrehung des Antriebsrads mehrfach beaufschlagt wird.

3. Verfahren nach Anspruch 1 oder 2,
**dadurch gekennzeichne**t, dass
das Verfahren mit einem räumlich benachbart zu der Impulsgeber-Einrichtung (2) für das Raddrehzahlsignal (SR) angeordneten Beschleunigungsgeber (12) durchgeführt wird und zur Erzeugung des Schlupf-Signals (SS) eine Auswerteeinrichtung (11) verwendet wird, die ebenfalls benachbart zu der Impulsgeber-Einrichtung (2) für das Raddrehzahlsignal (SR) und dem Beschleunigungsgeber (12) angeordnet ist.

4. Verfahren nach Anspruch 3,
**dadurch gekennzeichne**t, dass
als Auswerteeinrichtung (11) ein Microcontroller verwendet wird.

5. Verfahren nach einem der vorangehenden Ansprüche,
**dadurch gekennzeichnet, dass**
das Schlupf-Signal (SS) über ein Kabel (14) zu einem übergeordneten Odometrie-System (15) des Fahrzeugs nach dem Ruhestromprinzip übertragen wird, wobei ein stromloser Zustand als ein Anzeichen für Gleiten und Schlupf des Fahrzeugs gewertet wird.

6. Anordnung zum Überwachen des Fahrzustands eines Fahrzeugs, insbesondere eines Schienenfahrzeugs, mit einer Impulsgeber-Einrichtung (2) zum Erfassen eines Raddrehzahlsignals (SR),
**dadurch gekennzeichnet, dass**
- an die Impulsgeber-Einrichtung (2) eine Messwertverarbeitungs-Einrichtung (10) angeschlossen ist, die geeignet ist, den zeitlichen Verlauf des Raddrehzahlsignals (RS) zu ermitteln und Sprünge im zeitlichen Verlauf des Raddrehzahlsignals (RS) zu detektieren und bei Überschreitungen eines vorgegebenen Grenzwerts der Sprünge im zeitlichen Verlauf des Raddrehzahlsignals (SR) ein Schlupf-Hinweissignal (SH1) zu erzeugen,
- ein Beschleunigungsgeber (12) mit nachgeordneter Messwertverarbeitungs-Anordnung (13) vorgesehen ist, die geeignet ist, zeitparallel zum Erfassen des Raddrehzahlsignals (SR) ein Beschleunigungssignal (SB) hinsichtlich seines zeitlichen Verlaufs zu erfassen, Beschleunigungssprünge im zeitlichen Verlauf des Beschleunigungssignals (SB) zu detektieren und bei Überschreitungen eines vorgegebenen Schwellenwerts der Beschleunigungssprünge ein weiteres Schlupf-Hinweissignal (SH2) zu erzeugen, und
- an die Messwertverarbeitungs-Einrichtung (10) und an die Messwertverarbeitungs-Anordnung (13) eine Auswerteeinrichtung (11) angeschlossen ist, die geeignet ist, ein Schlupf-Signal (SS) zu erzeugen, wenn das eine Schlupf-Hinweissignal (SH1) gleichzeitig mit dem weiteren Schlupf-Hinweissignal (SH2) auftritt.

7. Anordnung nach Anspruch 6,
**dadurch gekennzeichnet, dass**
die Impulsgeber-Einrichtung (2) geeignet ist, bei einer Umdrehung des Antriebsrads mehrfach beaufschlagt zu werden.

8. Anordnung nach Anspruch 6 oder 7,
**dadurch gekennzeichnet, dass** benachbart zur Impulsgeber-Einrichtung (2) für das Raddrehzahlsignal (SR) der Beschleunigungsgeber (12) und die Messwertverarbeitungs-Einrichtung (10) sowie die Messwertverarbeitungs-Anordnung (13) und die Auswerteeinrichtung (11) angeordnet sind.

9. Anordnung nach einem der Ansprüche 6 bis 8,
**dadurch gekennzeichnet, dass**
die Messwertverarbeitungs-Einrichtung (10) und die Messwertverarbeitungs-Anordnung (13) sowie die Auswerteeinrichtung (11) von einem Microcontroller gebildet sind.

10. Anordnung nach einem der Ansprüche 6 bis 9,
**dadurch gekennzeichnet, dass**
die Auswerteeinrichtung (11) über ein Kabel (14) mit einem übergeordneten Odometrie-System (15) des Fahrzeugs verbunden ist.

11. Fahrzeug mit zumindest einer Anordnung nach einem der Ansprüche 6 bis 10.

## Claims

1. Method for monitoring the travel state of a vehicle, particularly a rail vehicle, in which a wheel speed signal (SR) is acquired at a drive wheel of the vehicle by means of a pulse generator device (2),
**characterised in that**
- the temporal course of the wheel speed signal (SR) is determined and leaps in the temporal course of the wheel speed signal (SR) are detected,
- if a predetermined limit value for the leaps in the temporal course of the wheel speed signal (SR) is exceeded, a slip indication signal (SH1) is produced,
- an acceleration signal (SB) is acquired in respect of its temporal course by means of an acceleration sensor (12) in parallel in time to the acquisition of the wheel speed signal (SR), leaps in the temporal course of the acceleration signal (SB) are detected,
- if a predetermined limit value for the leaps in the acceleration is exceeded, a further slip indication signal (SH2) is produced, and
- a slip signal (SS) is produced if the one slip indication signal (SH1) and the further slip indication signal (SH2) occur simultaneously.

2. Method according to claim 1,
**characterised in that**
a wheel speed signal (SR) that was produced by means of a pulse generator device (2), which was applied multiple times during a rotation of the drive wheel, is used for determining the temporal course of the wheel speed signal.

3. Method according to claim 1 or 2,
**characterised in that**
the method is executed by an acceleration sensor (12) arranged adjacent to the pulse generator device (2) for the wheel speed signal (SR) and an evaluation device (11) is used to produce the slip signal (SS), which is likewise arranged adjacent to the pulse generator device (2) for the wheel speed signal (SR) and the acceleration sensor (12).

4. Method according to claim 3,
**characterised in that**
a microcontroller is used as the evaluation device (11).

5. Method according to one of the preceding claims,
**characterised in that**
the slip signal (SS) is transmitted via a cable (14) to a superordinate odometry system (15) of the vehicle in accordance with the closed-circuit current principle, wherein a zero-current state is assessed as a sign of sliding and slip of the vehicle.

6. Arrangement for monitoring the travel state of a vehicle, particularly a rail vehicle, with a pulse generator device (2) to acquire a wheel speed signal (SR),
**characterised in that**
- a measured value processing device (10) configured to determine the temporal course of the wheel speed signal (SR) and to detect leaps in the temporal course of the wheel speed signal (SR) is connected to the pulse generator device (2) and, if a predetermined limit value of the leaps in the temporal course of the wheel speed signal (SR) is exceeded, to produce a slip indication signal (SH1),
- an acceleration sensor (12) is provided with a downstream measured value processing arrangement (13) configured, in parallel in time to acquiring the wheel speed signal (SR), to acquire an acceleration signal (SB) in respect of its temporal course, to detect leaps in acceleration in the temporal course of the acceleration signal (SB) and to produce a further slip indication signal (SH2) if a predetermined limit value of the leaps in acceleration is exceeded, and
- an evaluation device (11) is connected to the measured value processing device (10) and to the measured value processing arrangement (13) configured to produce a slip signal (SS) if the one slip indication signal (SH1) and the further slip indication signal (SH2) occur simultaneously.

7. Arrangement according to claim 6,
**characterised in that**
the pulse generator device (2) is configured to be applied multiple times during a rotation of the drive wheel.

8. Arrangement according to claim 6 or 7,
**characterised in that**
the acceleration sensor (12) and the measured value processing device (10) as well as the measured value processing arrangement (13) and the evaluation device (11) are arranged adjacent to the pulse generator device (2) for the wheel speed signal (SR).

9. Arrangement according to one of claims 6 to 8,
**characterised in that**
the measured value processing device (10) and the measured value processing arrangement (13) as well as the evaluation device (11) are formed by a microcontroller.

10. Arrangement according to one of claims 6 to 9,
**characterised in that**
the evaluation device (11) is connected via a cable (14) to a superordinate odometry system (15) of the vehicle.

11. Vehicle with at least one arrangement according to one of claims 6 to 10.

## Revendications

1. Procédé de contrôle de l'état de roulement d'un véhicule, notamment d'un véhicule ferroviaire, dans lequel on relève un signal (SR) de vitesse de rotation de roue sur une roue motrice du véhicule au moyen d'un dispositif (2) capteur d'impulsion,
**caractérisé en ce que**
- on détermine la courbe en fonction du temps du signal (SR) de vitesse de rotation de roue et on détecte des sauts dans la courbe en fonction du temps du signal (SR) de vitesse de rotation de roue,
- s'il se produit des dépassements d'une valeur limite donnée à l'avance des sauts dans la courbe en fonction du temps du signal (SR) de vitesse de rotation de roue, on produit un signal (SH1) d'indication de pseudo-glissement,
- au moyen d'un capteur (12) d'accélération, on relève, en parallèle dans le temps au relevé du signal (SR) de vitesse de rotation de roue, un signal (SB) d'accélération en ce qui concerne sa courbe en fonction du temps, on détecte des sauts d'accélération dans la courbe en fonction du temps du signal (SB) d'accélération,
- s'il se produit des dépassements d'une valeur de seuil donnée à l'avance des sauts d'accélération, on produit un autre signal (SH2) d'indication de pseudo-glissement et
- on produit un signal (SS) de pseudo-glissement si le un signal (SH1) d'indication d'auto-glissement se produit en même temps que l'autre signal ( SH2 ) d'indication de pseudo-glissement.

2. Procédé suivant la revendication 1,
**caractérisé en ce que**,
pour la détermination de la courbe en fonction du temps du signal de vitesse de rotation de roue, on utilise un signal (SR) de vitesse de rotation de roue, que l'on produit au moyen d'un dispositif (2) capteur d'impulsion, qui, lors d'un tour de la roue motrice, est alimenté plusieurs fois.

3. Procédé suivant la revendication 1 ou 2,
**caractérisé en ce que**
l'on effectue le procédé avec un capteur ( 12 ) d'accélération, monté voisin dans l'espace du dispositif ( 2 ) capteur d'impulsion pour le signal ( SR ) de vitesse de rotation de roue et, pour la production du signal ( SS ) de pseudo-glissement, on utilise un dispositif d'exploitation, disposé également au voisinage du dispositif ( 2 ) capteur d'impulsion pour le signal ( SR ) de vitesse de rotation de roue et du capteur ( 12 ) d'accélération.

4. Procédé suivant la revendication 3,
**caractérisé en ce que**
l'on utilise une micro-unité de commande comme dispositif ( 11 ) d'exploitation.

5. Procédé suivant l'une des revendications précédentes,
**caractérisé en ce que**
l'on transmet le signal ( SS ) de pseudo-glissement par un câble ( 14 ) à un système ( 15 ) d'odométrie supérieur hiérarchiquement du véhicule, suivant le principe du courant de repos, un état sans courant étant évalué comme une indication de glissement et de pseudo-glissement du véhicule.

6. Système de contrôle de l'état de roulement d'un véhicule, notamment d'un véhicule ferroviaire, comprenant un dispositif ( 2 ) capteur d'impulsion pour relever un signal ( SR ) de vitesse de rotation de roue,
**caractérisé en ce que**
- au dispositif ( 2 ) capteur d'impulsion est raccordé un dispositif ( 10 ) de traitement de valeur de mesure, propre à déterminer la courbe en fonction du temps du signal ( RS ) de vitesse de rotation de roue et à détecter des sauts dans la courbe en fonction du temps du signal ( RS ) de vitesse de rotation de roue et, s'il y a des dépassements d'une valeur limite donnée à l'avance des sauts dans la courbe en fonction du temps du signal ( SR ) de vitesse de rotation de roue, à produire un signal ( SH1 ) d'indication de pseudo-glissement,
- il est prévu un capteur ( 12 ) d'accélération ayant un système ( 13 ) de traitement de valeur de mesure en aval, propre à relever, en parallèle dans le temps au relevé du signal ( SR ) de vitesse de rotation de roue, un signal ( SB ) d'accélération en ce qui concerne sa courbe dans le temps, à détecter des sauts d'accélération dans la courbe en fonction du temps du signal ( SB ) d'accélération et, s'il y a des dépassements d'une valeur de seuil donnée à l'avance des sauts d'accélération, à produire un autre signal ( SH2 ) d'indication de pseudo-glissement, et
- au dispositif ( 12 ) de traitement de valeur de mesure et au système ( 13 ) de traitement de valeur de mesure est raccordé un dispositif ( 11 ) d'exploitation propre à produire un signal ( SS ) de pseudo-glissement, si le un signal ( SH1 ) d'indication de pseudo-glissement se produit en même temps que l'autre signal ( SH2 ) d'indication de pseudo-glissement.

7. Système suivant la revendication 6,
**caractérisé en ce que**
le dispositif ( 2 ) capteur d'impulsion est propre à être alimenté plusieurs fois, lors d'un tour de la roue motrice.

8. Système suivant la revendication 6 ou 7,
**caractérisé en ce que**
sont disposés au voisinage du dispositif ( 2 ) capteur d'impulsion, pour le signal ( SR ) de vitesse de rotation de roue, le capteur ( 12 ) d'accélération et le dispositif ( 10 ) de traitement de valeur de mesure, ainsi que le système ( 13 ) de traitement de valeur de mesure et le dispositif ( 11 ) d'exploitation.

9. Système suivant l'une des revendications 6 à 8,
**caractérisé en ce que**
le dispositif ( 10 ) de traitement de valeur de mesure et le système ( 13 ) de traitement de valeur de mesure, ainsi que le dispositif ( 11 ) d'exploitation, sont formés par une micro-unité de commande.

10. Système suivant l'une des revendications 6 à 9,
**caractérisé en ce que**
le dispositif ( 11 ) d'exploitation est relié par un câble ( 14 ) à un système ( 15 ) d'odométrie supérieure hiérarchiquement du véhicule.

11. Véhicule ayant au moins un système suivant l'une des revendications 6 à 10.
